# EUROPEAN PATENT SPECIFICATION

(11) **EP 1 003 340 B1**
(45) Date of publication and mention of the grant of the patent: **19.07.2006**
(21) Application number: 98203894.5
(22) Date of filing: 17.11.1998
(51) Int. Cl.: H04N 17/00

(54) **A method and an arrangement for aligning input and output video sequences for video quality measurement**
Verfahren und Anordnung zum Ausrichten von Eingangs- und Ausgangsvideobildfolgen zur Messung der Videoqualität
Procédé et dispositif pour aligner des séquences vidéo d'entrée et de sortie en vue de mesurer la qualité vidéo

(43) Date of publication of application: 24.05.2000
(73) Proprietor: Koninklijke KPN N.V., 9726 AE Groningen (NL)
(72) Inventor: Hekstra, Andries Pieter, 2252 KM Voorschoten (NL); Beerends, John Gerard, 2515 NB The Hague (NL); De Caluwe, Franciscus Elisabeth, 1057 VE Amsterdam (NL)

(56) References cited:
- EP-A- 0 801 360
- EP-A- 0 838 960
- EP-A- 0 869 686
- US-A- 4 450 482
- US-A- 5 214 507
- US-A- 5 329 379
- US-A- 5 446 492
- US-A- 5 596 364
- US-A- 5 727 080
- US-A- 5 832 140

## Description

### Field of the Invention

The present invention relates to video quality measurement and, in particular, to a method and an arrangement for aligning input and output video sequences of a video processing system such as a codec and video transmission channel.

### Background of the Invention

In practice, video quality is measured by comparing, on a pixel by pixel basis, input and output video sequences of a video processing system.

If the system under test changes in a global manner the contrast, the luminance or the chrominance signal of the input video sequence, in that all the frames are transformed in a like manner, a test person will judge this as less disturbent than changes which are locally applied. Codecs which increase or decrease the brightness and contrast of the output signal without creating an annoying difference, are examples of such a system.

If the video processing system performs a simple linear transformation, the processed or degraded output signal can be relatively easily corrected by applying inverse transformation. In practical systems, the transformation of the video processing system is non-linear and complicated, such that an inverse transformation is not always applicable.

Quality measures which do not use inverse transformation will always show a lesser correlation than quality measures which do use a type of inverse transformation in order to compensate the video output sequence.

US5272080 discloses an apparatus and method for dynamic histogram warping on histograms extracted from an image pair of a scene. The warped histograms are remapped to the image pair and the resulting remapped image pair is subsequently subjected to image processing. So the relevant images are adjusted based on the outcome of the histogram warping. The patent does not disclose how an objective quality measurement of a processed video sequence can be provided using dynamic histogram warping.

US5329370 discloses a method of quantitatively measuring fidelity of a reproduced image reconstructed from a compressed data representation of an original image. The method is an evaluation of the compression technique, not one measuring the quality of the capture process for an image.
Uptil now, there is no generally applicable and perceptively justified manner of calculating the inverse transformation of a video processing system. A linear approach is most often used in practice, however, with the risk of a too less correlation between subjectively and objectively measured video quality. Further, video sequences are bounded signals. In case of an input signal having a large contrast compared to the output signal, transformation, if linear, would lead to a mapping out of the applicable range.

### Summary of the Invention

The present invention aims to overcome the above disadvantages of the prior art by providing a method of measuring quality of an output video sequence with respect to an input video sequence of a video processing system, wherein histograms are obtained representative of the occurrence of a plurality of discrete pixel values of pixels present in both the input and output video sequences, and wherein a correction curve is obtained by matching the histograms of the input and output video sequences. By processing the output video sequence using the correction curve or curves obtained, and comparing the input video sequence and processed output video sequence a quality measure is obtained which matches in a optimum manner subjectively obtained video quality measures.

With the method according to the invention, a non-linear correction curve can be obtained, such as an S-type transformation curve of a video processing system.

By neglecting the correction curve, the objective quality measure obtained from the input and output video sequences will provide a too large difference, in those cases wherein a human observer will judge a difference in brightness and contrast, of an S-curve, not relevant for the quality of the video processing system under test.

In a preferred embodiment of the invention, the histograms are obtained by counting the cumulative relative occurrence of pixel values of the plurality of pixel values for each of the video sequences. That is, for each pixel value the cumulative percentage of occurrence in a video sequence is calculated, i.e. the sum is calculated of the percentages of the pixel values less than or equal to the current pixel value. The plurality of pixel values preferably ranges from a first value equivalent to a black pixel upto a last value equivalent to a white pixel.

In an embodiment, the pixel values are taken from a bounded domain having values ranging from 0 = black to 255 = white and any intermediate integer value.

In a further preferred embodiment of the method according to the invention, the correction curve is obtained by matching pixel values of the histograms of the input and output video sequences of which the cumulative percentages are as equal as possible.

Starting from a pixel value in the histogram of the output video sequence, for example, it is not likely that their will exist a pixel value in the histogram of the input video sequence having exactly the same cumulative percentage. Accordingly, in a further embodiment of the invention, interpolation between pixel values of the histogram of the input video sequences is provided in order to obtain an exact match of the cumulative percentages. A linear interpolation provides suitable results.

By starting from the pixel value in the middle of the domain of pixel values of a histogram, matching problems due to small percentages or fractions are avoided.

According to the invention, correction curves may be obtained for any of the luminance and chrominance signals of the input and output video sequences.

The invention relates further to an arrangement for performing the method described above, comprising means for obtaining histograms of both the input and output sequences, and means for matching the histograms to obtain a correction curve for a video signal.

The above and other features and advantages of the present invention will be readily apparent to one of ordinary skill in the art from the following written description when read in conjunction with the drawing.

### Brief Description of the Drawings

Figure 1 shows, in a schematic representation, a video system of which the video quality has to be measured.
Figure 2 shows, in a schematic representation, an embodiment of an arrangement according to the invention used with the video system shown in figure 1.

### Detailed Description of the Embodiments

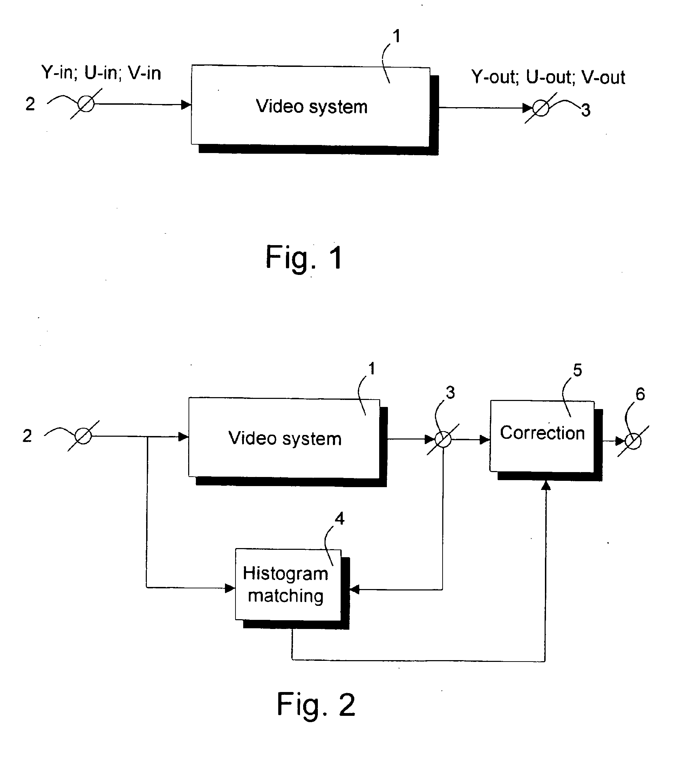

The video system 1 of figure 1 represents video processing systems such as a codec, a video transmission channel, etc. Input terminal 2 receives an input or source video sequence, generally comprising a luminance input signal Y-in and chrominance input signals U-in and V-in. Output terminal 3 of the video system 1 provides an output video sequence, comprised of the output luminance signal Y-out and output chrominance signals U-out and V-out.

Dependent on the type of video system 1 and its transformation function, the video sequence at the output terminal 3 is distorted or degraded compared to the input video sequence at the input terminal 2.

Video quality is measured by comparing the input and output video sequences, using video quality measurement equipment (not shown).

In order to obtain an as optimum as possible correlation between subjectively judged video quality, that is by one or more test persons looking to both the input and output video sequences, and the objectively measured video quality with the video quality measurement equipment, it is necessary to correct the output luminance and chrominance signals by a correction curve or curves, which depend on the input and output luminance and chrominance values.

In order to obtain such a correction curve or curves, according to the invention, histograms are obtained representative of the occurrence of discrete pixel values of pixels in both the input and output video sequences, i.e. the input and output luminance and chrominance signals. By matching the histograms thus obtained, the required correction curve or curves can be provided.

To this end, in figure 2, histogram matching means 4 are shown, generally comprising suitably programmed processing equipment, for obtaining the histograms.

In a preferred embodiment of the invention, the histograms are obtained by counting the cumulative percentage of occurrence of each of the pixel values in the input and output video sequences. The term cumulative denotes that the sum is calculated of the percentages of the pixel values less than or equal to the current pixel value. It is assumed that each pixel that is counted in the histograms is present in both the input and the output video sequences. From the histograms thus provided, a correction curve is obtained by matching pixel values of the histograms having the same or as optimum as possible the same cumulative percentage of occurrence.

Assume a pixel having the value x and a cumulative percentage y in the histogram of the output video sequence. The means 4 are now programmed such that in the histogram of the input video sequence the pixel value x' is obtained having the cumulative percentage y' which is the same or as best as possible the same as the cumulative percentage y. The correction curve is obtained by mapping x and x'. This procedure is repeated for the pixel values x+1, x+2, etc, such that all or nearly all the pixel values are mapped.

It will be understood that in general there is no exact match of the cumulative percentages y and y'. In such a case, in order to obtain an exact match, the invention provides for interpolation between the pixel values of the histogram of the input video sequences, providing a pixel value x''. The correction curve is then obtained by mapping x and x''

In a preferred embodiment of the invention, the discrete pixel values range from the value 0, equivalent to a black pixel, uptil 255 which is equivalent to a white pixel. Any intermediate integer value in this domain represents a pixel value.

In order to avoid calculation of low percentages, it is preferred to start the matching process of the histograms in the middle of the domain, i.e. pixel value 128. By this, calculation too small fractions are avoided. At the pixel value 128, the risk of a non-zero percentage is small. By this calculation proceeding towards the ends of the pixel value domain one can ressort to a straight curve once the percentages are becoming too small.

Although any type of interpolation is feasible, linear interpolation has been found to provide satisfactory results.

By processing the video output sequence at the output terminal 3 of the video system 1, as schematically indicated by means 5 in figure 2, a processed video output sequence at an output terminal 6 is provided. For obtaining a quality measurement, according to the invention, the input video sequence at input terminal 1 and the processed output video sequence at output terminal 6 are fed into a video quality measurement device (not shown). The video quality measure thus obtained has a much better correlation with subjectively established video quality measures than without the processing of the output video sequence using the correction curve or curves according to the invention.

Those skilled in the art will appreciate that for the luminance and chrominance video signals different correction curves may be obtained, adapted to the characteristics of the video systems and/or perceptive measures.

Although the matching of the histograms has been described starting from the output video sequence, it will be understood that the correction curves may also be obtained by starting from the input video sequence.

## Claims

1. A method of measuring quality of an output video sequence (3) with respect to an input video sequence (2) of a video processing system (1), wherein histograms are obtained representative of the occurrence of a plurality of discrete pixel values of pixels present in both said input and output video sequences (2, 3), and wherein a correction curve is obtained by matching (4) said histograms of said input and output video sequences (2, 3) and wherein said output video sequence (3) is processed (5) by said correction curve obtained, and wherein said input video sequence (2) and processed output video sequence are compared to provide a video quality measure.

2. A method according to claim 1, wherein said histograms are obtained by counting the cumulative relative occurrence of pixel values of said plurality of pixel values for each video sequence.

3. A method according to claim 2, wherein said plurality of pixel values ranges from a first value equivalent to a black pixel up to a last value equivalent to a white pixel.

4. A method according to claim 3, wherein said pixel values are taken from a bounded domain having values ranging from 0 = black to 255 = white and any intermediate integer value.

5. A method according to any of the previous claims, wherein said correction curve is obtained by matching pixel values of said histograms of said input and output video sequences (2, 3) of which the cumulative relative occurrences are as equal as possible.

6. A method according to claim 5, wherein interpolation between pixel values of the histogram of the input video sequence (2) is provided in order to obtain an exact match of the cumulative percentages of the histograms of the input and output video sequences (3).

7. A method according to claim 5 or 6, wherein said matching starts from the pixel value in the middle of the domain of pixel values.

8. A method according to any of the previous claims, wherein separate correction curves are obtained for any of the luminance and chrominance signals of the input and output video sequences (2, 3).

9. An arrangement for measuring quality of an output video sequence (3) with respect to an input video sequence (2) of a video processing system (1), comprising means for obtaining histograms of both said input and output video sequences, means for matching (4) said histograms to obtain a correction curve, means (5) for processing said output video sequence by said correction curve, and means for comparing said input video sequence and processed output video sequence to provide a video quality measure.

## Patentansprüche

1. Verfahren zur Messung der Qualität einer Ausgangs-Videoabfolge (3) in Bezug auf eine Eingangs-Videoabfolge (2) eines Video-Verarbeitungssystems (1), wobei Histogramme erhalten werden, die für das Auftreten einer Vielzahl von diskreten Pixelwerten von Pixeln repräsentativ ist, die sowohl in den besagten Eingangs- als auch in den Ausgangs-Videoabfolgen (2, 3) vorhanden sind, und wobei eine Korrekturkurve durch in Übereinstimmung Bringen (4) der besagten Histogramme der besagten Eingangs- und Ausgangs-Videoabfolgen (2, 3) erhalten wird und wobei die besagte Ausgangs-Videoabfolge (3) verarbeitet wird (5) durch die besagte erhaltene Korrekturkurve, und wobei die besagte Eingangs-Videoabfolge (2) und die verarbeitete Ausgangs-Videoabfolge verglichen werden, um eine Videoqualitätsmessung zu liefern.

2. Verfahren nach Anspruch 1, bei dem die besagten Histogramme durch Zählen des kumulativen relativen Auftretens von Pixelwerten der besagten Vielzahl von Pixelwerten für jede Videoabfolge erhalten werden.

3. Verfahren nach Anspruch 2, bei dem die besagte Vielzahl von Pixelwerten zwischen einem ersten Wert liegt, der äquivalent einem schwarzen Pixel ist, und bis zu einem letzten Wert, der äquivalent zu einem weissen Pixel ist.

4. Verfahren nach Anspruch 3, bei dem die besagten Pixelwerte aus einem begrenzten Bereich genommen werden, der Werte zwischen 0 = schwarz und 255 = weiss und jeden dazwischen liegenden Wert einer natürlichen Zahl annehmen kann.

5. Verfahren nach einem der vorstehenden Ansprüche, bei dem die besagte Korrekturkurve durch in Übereinstimmung Bringen von Pixelwerten der besagten Histogramme der besagten Eingangs- und Ausgangs-Videoabfolgen (2, 3) erhalten wird, von denen die kumulativen relativen Auftritt so gleich wie möglich berechnet werden.

6. Verfahren nach Anspruch 5, bei dem die Interpolation zwischen Pixelwerten des Histogramms der Eingangs-Videoabfolge (2) vorgesehen ist, um eine exakte Übereinstimmung der kumulativen Prozentzahlen der Histogramme der Eingangs- und Ausgangs-Videoabfolgen (3) zu erhalten.

7. Verfahren nach Anspruch 5 oder 6, bei dem das besagte in Übereinstimmung Bringen von dem Pixelwert startet, der in der Mitte des Bereiches der Pixelwerte liegt.

8. Verfahren nach einem der bevorstehenden Ansprüche, bei denen getrennte Korrekturkurven für jegliche Luminanz- und Chrominanz-Signale der Eingangs- und Ausgangs-Videoabfolgen (2, 3) erhalten werden.

9. Anordnung zur Messung der Qualität einer Ausgangs-Videoabfolge (3) in Bezug auf eine Eingangs-Videoabfolge (2) eines Videoverarbeitungssystems (1), umfassend Mittel zum Erhalt von Histogrammen von sowohl den besagten Eingangs- als auch Ausgangs-Videoabfolgen, Mittel zum in Übereinstimmung Bringen (4) der besagten Histogramme, um eine Korrekturkurve zu erhalten, Mittel (5) zur Verarbeitung der besagten Ausgangs-Videoabfolge durch die besagte Korrekturkurve, und Mittel zum Vergleich der besagten Eingangs-Videoabfolge und der verarbeiteten Ausgangs-Videoabfolge um eine Videoqualitätsmessung zu erhalten.

## Revendications

1. Procédé de mesure de qualité d'une séquence vidéo de sortie (3) par rapport à une séquence vidéo d'entrée (2) d'un système de traitement vidéo (1), où des histogrammes sont obtenus représentatifs de l'occurrence d'une pluralité de valeurs discrètes de pixel des pixels présents dans les deux séquences vidéo d'entrée et de sortie (2, 3), et où une courbe de correction est obtenue par la mise en correspondance (4) desdits histogrammes desdites séquences vidéo d'entrée et de sortie (2, 3) et où ladite séquence vidéo de sortie (3) est traitée (5) par ladite courbe de correction obtenue, et où ladite séquence vidéo d'entrée (2) et la séquence vidéo de sortie traitée sont comparées pour fournir une mesure de qualité vidéo.

2. Procédé selon la revendication 1, dans lequel lesdits histogrammes sont obtenus en comptant l'occurrence relative cumulative des valeurs de pixel de ladite pluralité des valeurs de pixel pour chaque séquence vidéo.

3. Procédé selon la revendication 2, dans lequel ladite pluralité de valeurs de pixel s'étend à partir d'une première valeur équivalente à un pixel noir jusqu'à une dernière valeur équivalente à un pixel blanc.

4. Procédé selon la revendication 3, dans lequel lesdites valeurs de pixel sont prises à partir d'un domaine limité ayant des valeurs s'étendant de 0 = noir à 255 = blanc et toute valeur entière intermédiaire.

5. Procédé selon l'une quelconque des revendications précédentes, dans lequel ladite courbe de correction est obtenue par la mise en correspondance des valeurs de pixel desdits histogrammes desdites deux séquences vidéo d'entrée et de sortie (2, 3) dont les occurrences relatives cumulatives sont aussi égales que possible.

6. Procédé selon la revendication 5, dans lequel une interpolation entre des valeurs de pixel de l'histogramme de la séquence vidéo d'entrée (2) est fournie afin d'obtenir une mise en correspondance exacte des pourcentages cumulatifs des histogrammes des séquences vidéo d'entrée et de sortie (3).

7. Procédé selon la revendication 5 ou 6, dans lequel ladite mise en correspondance commence à partir de la valeur de pixel au milieu du domaine des valeurs de pixel.

8. Procédé selon l'une quelconque des revendications précédentes, dans lequel des courbes de correction séparées sont obtenues pour un quelconque des signaux de luminance et de chrominance des séquences vidéo d'entrée et de sortie (2, 3).

9. Agencement pour mesurer la qualité d'une séquence vidéo de sortie (3) par rapport à une séquence vidéo d'entrée (2) d'un système de traitement vidéo (1), comprenant un moyen pour obtenir des histogrammes desdites deux séquences vidéo d'entrée et de sortie, un moyen pour la mise en correspondance (4) desdits histogrammes pour obtenir une courbe de correction, un moyen (5) pour traiter ladite séquence vidéo de sortie par ladite courbe de correction, et un moyen pour comparer ladite séquence vidéo d'entrée et une séquence vidéo de sortie traitée pour fournir une mesure de qualité vidéo.
